# EUROPÄISCHE PATENTSCHRIFT

(11) **EP 3 893 051 B1**
(45) Veröffentlichungstag und Bekanntmachung des Hinweises auf die Patenterteilung: **31.08.2022**
(21) Anmeldenummer: 21160641.3
(22) Anmeldetag: 04.03.2021
(51) Int. Cl.: G03B 13/36, G03B 13/20, G03B 17/38, G01S 17/10, G01S 17/88, G02B 7/08, G02B 7/32, H04N 5/232, G01S 7/497

(54) **ERFASSUNG VON BILDDATEN EINES BEWEGTEN OBJEKTS**
DETECTION OF IMAGE DATA OF A MOVING OBJECT
ACQUISITION DE DONNÉES D'IMAGE D'UN OBJET MOBILE

(30) Priorität: 09.04.2020 DE 102020109929
(43) Veröffentlichungstag der Anmeldung: 13.10.2021
(73) Patentinhaber: SICK AG, 79183 Waldkirch (DE)
(72) Erfinder: MÜLLER, Romain, 79252 Stegen (DE); PONTIGGIA, Tobias, 79215 Elzach (DE)

(56) Entgegenhaltungen:
- EP-A2- 3 537 339
- JP-A- 2005 215 373
- US-A- 4 445 767
- US-B2- 9 270 878

## Beschreibung

Die Erfindung betrifft eine Kamera und ein Verfahren zur Erfassung von Bilddaten eines durch einen Erfassungsbereich bewegten Objekts nach dem Oberbegriff von Anspruch 1 beziehungsweise 15.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Die Kamera ist vielfach Teil eines komplexen Sensorsystems. Beispielsweise ist es bei Lesetunneln an Förderbändern üblich, eine Vielzahl von kamerabasierten Codelesern einerseits nebeneinander zur Abdeckung einer größeren Förderbandbreite und andererseits aus unterschiedlichen Perspektiven zu montieren, um Objekte von mehreren Seiten aufzunehmen. Weiterhin wird oftmals die Geometrie der geförderten Objekte vorab mit einem gesonderten Laserscanner vermessen, um daraus Fokusinformationen, Auslösezeitpunkte, Bildbereiche mit Objekten und dergleichen zu bestimmen.

Ohne Vorabinformation eines Laserscanners über die Objektabstände lässt sich anhand des Kontrasts feststellen, ob ein Bild in einer scharf eingestellten Fokuslage aufgenommen ist. Um auf diese Weise den Fokus einzustellen, müssen viele Bilder aufgenommen werden, und das ist gerade bei Aufnahmen in Relativbewegung nicht möglich, weil sich das Objekt womöglich schon nicht mehr in einer geeigneten Aufnahmeposition befindet, wenn die richtige Fokuslage gefunden ist.

Eine andere Möglichkeit ist, den Abstand zu dem Objekt mit der Kamera selbst zu messen. Das bedeutet jedoch, dass die einzustellende Fokuslage erst spät bekannt wird und je nach Stellweg nicht mehr genug Zeit bleibt, um die Fokuslage anzupassen, bis sich das Objekt in seiner Aufnahmeposition befindet. Mit einer vorgelagerten Abstandsmessung beispielsweise per Laserscanner werden diese zeitlichen Randbedingungen entschärft. Das bedeutet aber Zusatzaufwand für Anschaffung, Montage und Einrichtung dieses Laserscanners. Außerdem schafft das zwar für vereinzelte Objekte genug Zeit für eine Fokusumstellung, nicht aber für den Fall, dass zwei Objekte unterschiedlicher Höhe dicht aufeinanderfolgen.

In der DE 10 2018 105 301 A1 wird ein Abstandssensor in eine Kamera integriert, der auf einem Lichtlaufzeitverfahren basiert (TOF, Time of Flight). Damit wird ein Höhenprofil gemessen, und anhand dessen werden verschiedene Funktionen umgesetzt. Eine dieser Funktionen ist die Einstellung der Fokuslage einer Empfangsoptik. Die angesprochene Problematik mit zu knappen Zeiten für eine Fokusverstellung wird jedoch nicht diskutiert.

Die JP 2005 215373 A offenbart einen Fotoapparat, bei dem ein aufzunehmendes Objekt festgelegt wird, das während dessen weiterer Bewegung in einem Livebild im Fokus gehalten wird. Ist das Objekt dann in einen gewünschten Abstandsbereich gelangt, wird die richtige Aufnahme ausgelöst.

In der US 4 445 767 wird eine fokussierende Kamera vorgestellt, die eine fokussierte Aufnahme auslöst, sobald ein zu fotografierendes Objekt eine festgelegte Abstandsposition erreicht.

Aus der US 9 270 878 B2 ist ein Bildaufnahmeverfahren mit einer multifokalen Linse bekannt, die mehrere Regionen unterschiedlicher Fokuslagen aufweist. Ein Objekt wird mit derjenigen Region aufgenommen, die jeweils die kürzestes Fokussierzeit benötigt.

Es ist daher Aufgabe der Erfindung, eine verbesserte Aufnahme von Bildern in passend eingestellter Fokuslage zu erreichen.

Diese Aufgabe wird durch eine Kamera und ein Verfahren zur Erfassung von Bilddaten eines durch einen Erfassungsbereich bewegten Objekts nach Anspruch 1 beziehungsweise 15 gelöst. Kamera und Objekt befinden sich in Relativbewegung zueinander, dadurch bewegen sich die aufzunehmenden Objekte in den beziehungsweise durch den Erfassungsbereich der Kamera. Ein Bildsensor nimmt Bilder beziehungsweise Bilddaten des Erfassungsbereichs und somit eines dort befindlichen Objekts auf. Um scharfe Bilder zu erzeugen, ist eine fokusverstellbare Empfangsoptik vorgesehen, also ein Empfangsobjektiv, das je nach Qualitätsanforderungen eine oder mehrere Linsen und sonstige optische Elemente aufweist. Ein Abstandssensor misst einen Abstandswert für den Abstand zwischen der Kamera und dem aufzunehmenden Objekt. Eine Steuer- und Auswertungseinheit fungiert als Fokusverstelleinheit. Sie erhält dafür den Abstandswert von dem Abstandssensor und stellt die Fokuslage der Empfangsoptik anhand dieses Abstandswerts ein. Die Steuer- und Auswertungseinheit ist vorzugsweise zusätzlich mit dem Bildsensor verbunden, um Bilddaten auszulesen, vorzuverarbeiten, auszuwerten und dergleichen. Alternativ gibt es jeweils eigene Bausteine, die sich um die Fokussierung einerseits und die sonstigen Aufgaben in der Kamera wie Verarbeitung der Bilddaten andererseits kümmern.

Die Erfindung geht von dem Grundgedanken aus, die Fokuslage nicht ganz ideal einzustellen, um kürzere Fokussierzeiten zu erreichen. Die in Kauf genommene Fokusabweichung bleibt dabei in einem wohldefinierten und noch akzeptablen Rahmen. Sehr anschaulich gesprochen fokussiert die Kamera nicht ideal, sondern nur gut genug. Die Bilddaten sind daher etwas unscharf, genügen jedoch weiterhin für eine geforderte Bildschärfe. Die ideale Fokuslage, zu der eine Fokusabweichung besteht, bedeutet kein theoretisches Optimum, sondern diejenige, die laut Abstandsmessung einzustellen wäre. Unvermeidliche Abweichungen durch Messfehler der Abstandsmessung, Toleranzen der Fokusverstellung und dergleichen weist auch die ideale Fokuslage auf. Die Fokuslage, in der die Bilddaten aufgenommen werden, weicht absichtlich von dem ab, was die Kamera anhand der Abstandsmessung leisten könnte. Um die ideale Fokuslage einzustellen, fehlt es nicht an Leistungsfähigkeit der Kamera, sondern an Fokussierzeit.

Die Erfindung hat den Vorteil, dass die Fokussierzeit verkürzt werden kann und die aufgenommenen Bilddaten dennoch für den angestrebten Zweck verwendbar sind. Insbesondere bleibt eine bestimmte Bildauswertung wie Codelesen möglich. Wenn durch bezüglich des Aufnahmezeitpunkts vergleichsweise späte Abstandsmessung oder dicht aufeinanderfolgende Objekte stark unterschiedlicher Höhe nur sehr wenig Zeit zur Verfügung steht, müssen die Bilddaten schnell genug aufgenommen werden. Dann können Kompromisse in der Unschärfe gemacht werden, um das Bild noch rechtzeitig aufzunehmen. Insgesamt erhöht sich somit der Anteil an Bilddaten, die ausreichend scharf aufgenommen werden, und das wiederum erhöht die Rate erfolgreicher Bildauswertungen, speziell die Leserate bei einer Codeleseanwendung.

Die Steuer- und Auswertungszeit ist bevorzugt dafür ausgebildet, eine verfügbare Fokussierzeit aus dem Zeitpunkt zu bestimmen, zu dem das Objekt die Aufnahmeposition erreichen wird. Zu diesem Zeitpunkt muss eine Fokuslage eingestellt werden, die eine ausreichend scharfe Bildaufnahme erlaubt. Die Fokusverstellung kann andererseits erst beginnen, wenn ein Abstandsmesswert des Abstandssensors vorliegt und sobald vorherige Bildaufnahmen in anderer Fokuslage abgeschlossen sind, beispielsweise für ein im Strom der bewegten Objekte weiter vorne befindliches Objekt anderer Höhe. Der Zeitpunkt, ab wann eine Umfokussierung beginnen kann, kann demnach aus Messdaten des Abstandssensors abgeleitet werden.

Der Abstandssensor ist bevorzugt dafür ausgebildet, die Geschwindigkeit der Bewegung des Objekts zu messen. Dazu eignet sich beispielsweise ein Mehrzonen-Abstandssensor, in dessen Messzonen das Objekt im Verlauf der Bewegung nacheinander eintritt. Die Geschwindigkeit ermöglicht, Zeitpunkte und Positionen der Erfassung eines Objekts durch Kamera und/oder Abstandssensor und insbesondere eine Aufnahmeposition des Objekts ineinander umzurechnen. Alternativ zu einer Messung durch den Abstandssensor ist die Geschwindigkeit bekannt, parametriert, von einem weiteren Sensor oder aus früheren Bildaufnahmen der Kamera gemessen und wird bei Bedarf extrapoliert, insbesondere als konstant angenommen.

Die Steuer- und Auswertungseinheit ist bevorzugt dafür ausgebildet, eine benötigte Umfokussierzeit aus der momentanen Fokuslage und der gemäß dem gemessenen Abstandswert idealen Fokuslage zu bestimmen. Die benötigte Umfokussierzeit ist das Gegenstück zu der verfügbaren Fokussierzeit. Die benötigte Umfokussierzeit ist eine Eigenschaft des verbauten Objektivs der Empfangsoptik und der zugehörigen Fokusverstellung. Für einen bestimmten Verstellweg wird daher eine bestimmte Umfokussierzeit benötigt, wobei Toleranzen und möglicherweise Temperatur- und Alterungseffekte berücksichtigt und kompensiert werden können.

In der Steuer- und Auswertungseinheit ist bevorzugt eine Zuordnungsvorschrift zwischen Verstellungen aus einer ersten Fokuslage in eine zweite Fokuslage und einer dafür benötigten Umfokussierzeit abgelegt. Die Zuordnungsvorschrift kann insbesondere als analytische Funktion oder als Näherung, beispielsweise insgesamt oder stückweise lineare oder polynomiale Funktion, oder als eine Nachschlagtabelle (LUT, Lookup Table) vorgegeben sein. Die jeweiligen Umfokussierzeiten können aus Eigenschaften von Objektiv und Fokusverstellung errechnet oder simuliert werden, oder es werden entsprechende Kalibriermessungen durchgeführt.

Die Steuer- und Auswertungseinheit ist bevorzugt dafür ausgebildet, die verfügbare Fokussierzeit mit der benötigten Umfokussierzeit zu vergleichen und Bilddaten nur dann mit einer Fokusabweichung aufzunehmen, wenn die benötigte Umfokussierzeit nicht ausreicht. Es wird also geprüft, ob es überhaupt nötig ist, einen Kompromiss einzugehen und ein Bild mit einer Fokusabweichung aufzunehmen. Reicht die verfügbare Fokussierzeit aus, wird vorzugsweise die ideale Fokuslage eingestellt.

Die Steuer- und Auswertungseinheit ist bevorzugt dafür ausgebildet, eine Fokusverstellung auf die ideale Fokuslage vorzunehmen, jedoch schon Bilddaten aufzunehmen, sobald die Fokusabweichung klein genug für eine geforderte Bildschärfe geworden ist. Das ist eine Möglichkeit, ein Bild mit wohldefinierter Fokusabweichung aufzunehmen. Obwohl klar ist, dass die verfügbare Fokussierzeit nicht ausreichen wird, um die ideale Fokusposition einzustellen, wird dennoch dorthin verstellt. Die Bildaufnahme erfolgt aber vorzeitig, ehe die ideale Fokusposition erreicht ist, und zwar zu einem Zeitpunkt, an dem die noch verbleibende Fokusabweichung beziehungsweise der noch nicht bis zur idealen Fokusposition verbleibende Stellweg klein genug geworden ist, um die geforderte Bildschärfe zu gewährleisten. Dabei kann ausgerechnet werden, wann erstmals nur noch die erforderliche Fokusabweichung besteht, und dann ausgelöst werden. Alternativ wird die verfügbare Fokussierzeit ausgenutzt und im letzten Moment ausgelöst, um der idealen Fokuslage so nahe wie möglich zu kommen. Weiterhin gilt die Bedingung, dass die Fokusabweichung dann klein genug ist, diese Bedingung wird sozusagen übererfüllt.

Die Steuer- und Auswertungseinheit ist bevorzugt dafür ausgebildet, eine Fokusverstellung nicht bis zu der idealen Fokuslage, sondern nur bis auf die Fokusabweichung vorzunehmen. Das ist eine weitere Möglichkeit der Kompensation. Hier wird gezielt nicht die ideale Fokuslage angefahren, sondern eine nähere Fokuslage mit einer hinreichend kleinen Fokusabweichung, um die benötigte Umfokussierzeit zu verkürzen.

Die Steuer- und Auswertungseinheit ist bevorzugt dafür ausgebildet, die Aufnahme von Bilddaten über die verfügbare Fokussierzeit hinaus zu verzögern, wenn erst dann eine Fokuslage mit einer Fokusabweichung erreichbar ist, die klein genug für eine geforderte Bildschärfe der Bilddaten bleibt. Es kann Situationen geben, in denen die verfügbare Fokussierzeit nicht einmal dafür ausreicht, eine Fokuslage mit der noch tolerierbaren Fokusabweichung einzustellen. Dann nutzt es nicht, zum vorgesehenen Zeitpunkt eine Aufnahme auszulösen, denn es ist im Vorhinein klar, dass mit diesen Bilddaten der angestrebte Zweck nicht erfüllt werden kann. Deshalb wird die Bildaufnahme verzögert, bis eine Aufnahme mit der tolerierbaren Fokusabweichung möglich ist. Das Objekt befindet sich dann nicht mehr in einer optimalen Aufnahmeposition, aber hier besteht im Gegensatz zu wissentlich nicht scharf genug aufgenommenen Bilddaten zumindest eine Chance, dass der angestrebte Zweck noch erfüllt werden kann.

Vorzugsweise überlappt ein Abstandsmesssichtfeld des Abstandssensors mit dem Erfassungsbereich zumindest teilweise und/oder ist der Abstandssensor in die Kamera integriert. Ein überlappender Sichtbereich von Abstandssensor und Kamera bedeutet, dass der Abstandswert erst kurz vor der Bildaufnahme gemessen wird, anders als beispielsweise bei einem vorgelagerten Laserscanner. Die verfügbare Fokussierzeit wird also besonders kurz, selbst ohne die Situation, dass zwei Objekte unterschiedlicher Höhe direkt aufeinander folgen. Die Überlappung der Sichtbereiche ergibt sich insbesondere, wenn der Abstandssensor in die Kamera integriert wird. Das hat viele Vorteile, da das System kompakt und gekapselt bleibt, die Steuer- und Auswertungseinheit einen einfachen internen Zugriff auf den Abstandssensor hat und ein Gesamtsystem viel einfacher zu montieren und in Betrieb zu nehmen ist. Durch die erfindungsgemäße Fokussierung werden die Nachteile der vergleichsweise späten Abstandsmessung zumindest deutlich abgemildert.

Das Abstandsmesssichtfeld ist vorzugsweise so ausgerichtet, dass darin ein Objekt erfasst wird, ehe es in den Erfassungsbereich eintritt. Dadurch wird die ideale Fokuslage früher bekannt, so dass Einbußen der verfügbaren Fokussierzeit aufgrund fehlender Informationen begrenzt werden. Dieser Nachteil eines integrierten oder bei der Kamera angeordneten Abstandssensors gegenüber einem vorgelagerten Laserscanner wird somit wenigstens teilweise kompensiert. Erreichbar ist das durch ein Abstandsmesssichtfeld, das größer ist als der Erfassungsbereich der Kamera oder indem der Abstandssensor auf die in den Erfassungsbereich bewegten Objekte zu gerichtet wird. Abstandswerte, die auf diese Weise gemessen werden, müssen trigonometrisch umgerechnet werden, da der schräg gemessene Abstand ein anderer ist als der spätere Abstand zum Objekt während der Bildaufnahme. Diese Umrechnung ist aber auch dann zumindest vorteilhaft, wenn die Abstandsmessung erst innerhalb des Erfassungsbereichs erfolgt, lediglich ist dann der Unterschied in den Winkeln geringer.

Der Abstandssensor ist bevorzugt als optoelektronischer Abstandssensor insbesondere nach dem Prinzip des Lichtlaufzeitverfahrens ausgebildet. Derartige Abstandssensoren sind als fertige Chips beziehungsweise Module erhältlich. Besonders bevorzugt weist der Abstandssensor eine Vielzahl von SPADs auf (Single-Photon Avalanche Photodiode), die jeweils über TDCs (Time-to-Digital Converter) eine Einzellichtlaufzeit messen.

Die Steuer- und Auswertungseinheit ist bevorzugt dafür ausgebildet, die Fokusabweichung als klein genug für eine geforderte Bildschärfe der Bilddaten zu bewerten, wenn sich das Objekt laut Abstandsmesswert bei Auslösen der Aufnahme der Bilddaten in der eingestellten Fokuslage noch in einem Tiefenschärfenbereich befindet. Das ist eine mögliche Festlegung, wann eine Fokusabweichung klein genug beziehungsweise eine geforderte Bildschärfe noch eingehalten wird. Dazu kennt die Steuer- und Auswertungseinrichtung vorzugsweise eine Zuordnung zwischen Abstand und für diesen Abstand noch zulässiger Fokusabweichung. Diese Zuordnung ist natürlich eine andere als diejenige, die benötigte Fokussierzeiten aus einer aktuellen und einer einzustellenden Fokuslage bestimmt. Hier wird nun einer idealen Fokuslage eine noch zulässige Fokusabweichung zugeordnet, und es ist eine Möglichkeit, dieses Kriterium auszudrücken, dass das Objekt noch im Tiefenschärfenbereich aufgenommen wird. Für die Form der Zuordnung gilt aber das gleiche, sie kann als analytische Funktion oder als Näherung, beispielsweise insgesamt oder stückweise lineare oder polynomiale Funktion, oder als eine Nachschlagtabelle (LUT, Lookup Table) vorgegeben sein.

Die Steuer- und Auswertungseinheit ist bevorzugt dafür ausgebildet, den Tiefenschärfenbereich aus optischen Eigenschaften zu bestimmen. In dieser Ausführungsform ist der Tiefenschärfenbereich im engeren optischen oder physikalischen Sinn zu verstehen. Das lässt sich insbesondere nach der Vorschrift DOFP(d)~d²Nc/f² bestimmen. Hierbei ist DOFp der physikalische Tiefenschärfenbereich (DOF, Depth of Field), d der Abstand zum Objekt, N die numerische Apertur des Objektivs, die damit blendenabhängig ist, c der Zerstreuungskreis (Circle of Confusion) und entspricht dem Grad der erlaubten Unschärfe, wie etwa ein Pixel auf dem Bildsensor, und f die Brennweite der Empfangsoptik. Die meisten dieser Parameter sind Objektivkonstanten der gewählten Empfangsoptik, und es wird erkennbar, dass wegen der quadratischen Abstandsabhängigkeit der DOFp von d im Nahbereich schärfere Anforderungen an die Fokusabweichung zu stellen sind als im Fernbereich. Diese Aussage ist allerdings auf die Objektposition und nicht beispielsweise die Einstellung einer Brennweite oder Bildschnittweite der Empfangsoptik bezogen, die mit der über den Objektabstand definierten Fokuslage nicht-linear zusammenhängt.

Die Steuer- und Auswertungseinheit ist bevorzugt dafür ausgebildet, den Tiefenschärfenbereich aus anwendungsspezifischen Anforderungen zu bestimmen. Der Tiefenschärfenbereich ist demnach je nach Ausführungsform nicht rein physikalisch definiert, sondern kann davon abhängen, welches Auswertungsziel mit den Bilddaten verfolgt wird. Dabei kommt es nicht primär auf reine Bildschärfekriterien an, sondern auf die Frage, ob die Bilddaten die angestrebte Auswertung zulassen werden. Das kann von Anwendung zu Anwendung sehr unterschiedlich zu beurteilen sein.

Die Steuer- und Auswertungseinheit ist bevorzugt dafür ausgebildet, mit Hilfe der Bilddaten einen Codeinhalt eines Codes auf dem Objekt zu lesen. Die Kamera wird so zu einem kamerabasierten Codeleser für Barcodes und/oder 2D-Codes nach diversen Standards, gegebenenfalls auch für eine Texterkennung (OCR, Optical Character Reading). Bevor ein Code gelesen wird, erfolgt noch bevorzugter eine Segmentierung, mit der interessierende Bereiche (ROI, Region of Interest) als Codekandidaten identifiziert werden.

Die Steuer- und Auswertungseinheit ist bevorzugt dafür ausgebildet, die Fokusabweichung als klein genug für eine geforderte Bildschärfe der Bilddaten zu bewerten, wenn die Bildschärfe ausreicht, einen aufgenommenen Code zu lesen. Das kann man als einen bevorzugten Fall anwendungsspezifischer Anforderungen an den Tiefenschärfenbereich verstehen, das Bild soll nämlich so scharf aufgenommen sein, dass ein Code gelesen werden kann. Diese Erwartungshaltung, wann die Bildschärfe ausreicht, um einen Code zu lesen, kann vorab simuliert oder experimentell erzeugt werden. Dazu werden der Kamera Codes unter typischen Bedingungen beispielsweise hinsichtlich Umgebungslicht und Druckqualität in verschiedenen Abständen präsentiert, um herauszufinden, bis zu welcher Fokusabweichung ein Code noch gelesen wird (GoodRead) beziehungsweise ab welcher Fokusabweichung der Code nicht mehr gelesen wird (NoRead). Ob ein Code gelesen werden kann, bestimmt sich insbesondere abhängig von einer Codeart, einer Modulgröße und/oder einem Decodierverfahren. Das sind Parameter oder Einstellungen, die sich deutlich auf die Anforderungen an die Bildschärfe auswirken. In der Terminologie eines anwendungsspezifischen Tiefenschärfenbereichs hängt dieser insbesondere von den genannten Parametern ab.

Die Kamera ist vorzugsweise stationär an einer Fördereinrichtung montiert, die zu erfassende Objekte in einer Förderrichtung durch den Erfassungsbereich führt. Das ist eine häufige industrielle Anwendung einer Kamera, und die Fördereinrichtung sorgt dafür, dass sich die Objekte durch den Erfassungsbereich bewegen. Durch die ständig wechselnden Objekte und die strenge Vorgabe der Objektwechsel durch die Fördereinrichtung muss die Fokusverstellung praktisch ständig und unter engen Zeitvorgaben reagieren können. Die Geschwindigkeit der Fördereinrichtung und damit der bewegten Objekte kann von einer Förderersteuerung, einem Sensor wie einem Encoder an der Fördereinrichtung oder aus einer Parametrierung des Förderers gewonnen werden, um zu bestimmen, wann sich ein Objekt in einer Aufnahmeposition befinden wird und dergleichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit einem Abstandssensor;
- Fig. 2: eine dreidimensionale Ansicht einer beispielhaften Anwendung der Kamera in Montage an einem Förderband;
- Fig. 3: eine Darstellung einer Kamera und eines Objekts, das in deren Erfassungsbereich bewegt wird, zur Erläuterung eines Fokussierverfahrens;
- Fig. 4: eine Darstellung ähnlich Figur 3, nun mit zwei hintereinander bewegten Objekten unterschiedlicher Höhe; und
- Fig. 5: eine Darstellung von erfolgreichen und nicht erfolgreichen Leseversuchen eines Codes auf einem Objekt bei verschiedenen Fokuslagen (X-Achse) und Objektabständen (Y-Achse).

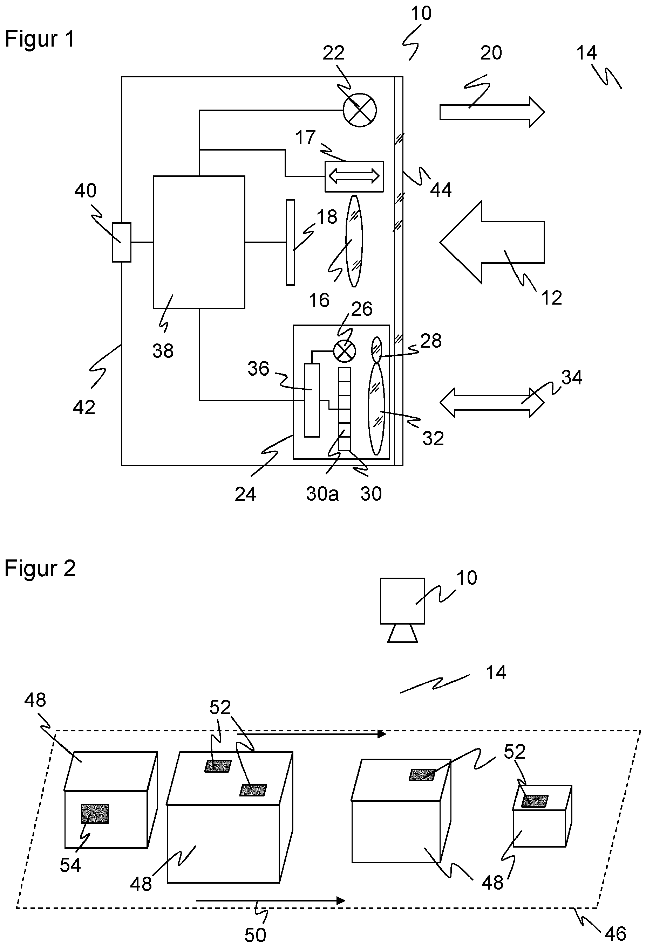

Figur 1 zeigt eine schematische Schnittdarstellung einer Kamera 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert. Die Empfangsoptik 16 kann mittels einer Fokusverstellung 17 auf verschiedene Fokuslagen eingestellt werden, um Objekte in unterschiedlichem Abstand scharf aufzunehmen. Dafür sind verschiedenste Funktionsprinzipien vorstellbar, etwa eine Veränderung der Bildschnittweite durch Schrittmotor oder eine Tauchspulaktorik, aber auch eine Veränderung der Brennweite etwa durch eine Flüssig- oder Gellinse.

Um den Erfassungsbereich 14 während einer Aufnahme der Kamera 10 mit Sendelicht 20 auszuleuchten, umfasst die Kamera 10 eine optionale Beleuchtungseinheit 22, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 22 wie deren Farbe, Intensität und Richtung anzupassen.

Zusätzlich zu dem eigentlichen Bildsensor 18 zur Erfassung von Bilddaten weist die Kamera 10 einen optoelektronischen Abstandssensor 24 auf, der mit einem Lichtlaufzeitverfahren (TOF, Time of Flight) Abstände zu Objekten in dem Erfassungsbereich 14 misst. Der Abstandssensor 24 umfasst einen TOF-Lichtsender 26 mit TOF-Sendeoptik 28 sowie einen TOF-Lichtempfänger 30 mit TOF-Empfangsoptik 32. Damit wird ein TOF-Lichtsignal 34 ausgesandt und wieder empfangen. Eine Lichtlaufzeitmesseinheit 36 bestimmt die Laufzeit des TOF-Lichtsignals 34 und daraus den Abstand zu einem Objekt, an dem das TOF-Lichtsignal 34 zurückgeworfen wurde.

Der TOF-Lichtempfänger 30 weist in der dargestellten Ausführungsform mehrere Lichtempfangselemente 30a oder Pixel auf und kann so sogar ein ortsaufgelöstes Höhenprofil erfassen. Alternativ weist der TOF-Lichtempfänger 30 nur ein Lichtempfangselement 30a auf beziehungsweise verrechnet mehrere Messwerte der Lichtempfangselemente 30a zu einem Abstandswert. Der Aufbau des Abstandssensors 24 ist rein beispielhaft, und auch andere optoelektronische Abstandsmessungen ohne Lichtlaufzeitverfahren sowie nicht-optische Abstandsmessungen sind vorstellbar. Die optoelektronische Entfernungsmessung mittels Lichtlaufzeitverfahren ist bekannt und wird daher nicht im Einzelnen erläutert. Zwei beispielhafte Messverfahren sind Photomischdetektion mit einem periodisch modulierten TOF-Lichtsignal 34 und Pulslaufzeitmessung mit einem pulsmodulierten TOF-Lichtsignal 34. Dabei gibt es auch hochintegrierte Lösungen, in denen der TOF-Lichtempfänger 30 mit der Lichtlaufzeitmesseinheit 36 oder zumindest Teilen davon, etwa TDCs (Time-to-Digital-Converter) für Laufzeitmessungen, auf einem gemeinsamen Chip untergebracht ist. Dazu eignet sich insbesondere ein TOF-Lichtempfänger 30, der als Matrix von SPAD-Lichtempfangselementen 30a aufgebaut ist (Single-Photon Avalanche Diode). Für eine solche SPAD-basierte Abstandsmessung sind mehrere Lichtempfangselemente 32a besonders vorteilhaft, die nicht für eine ortsaufgelöste Messung, sondern eine statistische Mehrfachmessung genutzt werden, mit der ein genauerer Abstandswert bestimmt wird. Die TOF-Optiken 28, 32 sind nur symbolhaft als jeweilige Einzellinsen stellvertretend für beliebige Optiken wie beispielsweise ein Mikrolinsenfeld gezeigt.

Eine Steuer- und Auswertungseinheit 38 ist mit der Fokusverstellung 17, der Beleuchtungseinheit 22, dem Bildsensor 18 und dem Abstandssensor 24 verbunden und für die Steuerungs-, Auswertungs- und sonstigen Koordinierungsaufgaben in der Kamera 10 zuständig. Sie steuert also die Fokusverstellung 17 mit einer Fokuslage entsprechend dem Abstandswert des Abstandssensors 24 an und liest Bilddaten des Bildsensors 18 aus, um sie zu speichern beziehungsweise an einer Schnittstelle 40 auszugeben. Vorzugsweise ist die Steuer- und Auswertungseinheit 38 in der Lage, Codebereiche in den Bilddaten aufzufinden und zu decodieren, womit die Kamera 10 zu einem kamerabasierten Codeleser wird. Für die verschiedenen Steuer- und Auswertungsaufgaben können mehrere Bausteine vorgesehen sein, beispielsweise um die Fokusanpassungen in einem separaten Baustein oder Vorverarbeitungen der Bilddaten auf einem separaten FPGA durchzuführen.

Die Kamera 10 wird durch ein Gehäuse 42 geschützt, das im vorderen Bereich, wo das Empfangslicht 12 einfällt, durch eine Frontscheibe 44 abgeschlossen ist.

Figur 2 zeigt eine mögliche Anwendung der Kamera 10 in Montage an einem Förderband 46. Die Kamera 10 wird ab jetzt nur noch als Symbol und nicht mehr mit ihrem bereits anhand der Figur 1 erläuterten Aufbau gezeigt. Das Förderband 46 fördert Objekte 48, wie durch den Pfeil 50 angedeutet, durch den Erfassungsbereich 14 der Kamera 10. Die Objekte 48 können an ihren Außenflächen Codebereiche 52 tragen. Aufgabe der Kamera 10 ist, Eigenschaften der Objekte 48 zu erfassen und in einem bevorzugten Einsatz als Codeleser die Codebereiche 52 zu erkennen, die dort angebrachten Codes auszulesen, zu dekodieren und dem jeweils zugehörigen Objekt 48 zuzuordnen. Um auch Objektseiten und insbesondere seitlich angebrachte Codebereiche 54 zu erfassen, werden vorzugsweise zusätzliche, nicht dargestellte Kameras 10 aus unterschiedlicher Perspektive eingesetzt. Außerdem können mehrere Kameras 10 nebeneinander angeordnet werden, um gemeinsam einen breiteren Erfassungsbereich 14 abzudecken.

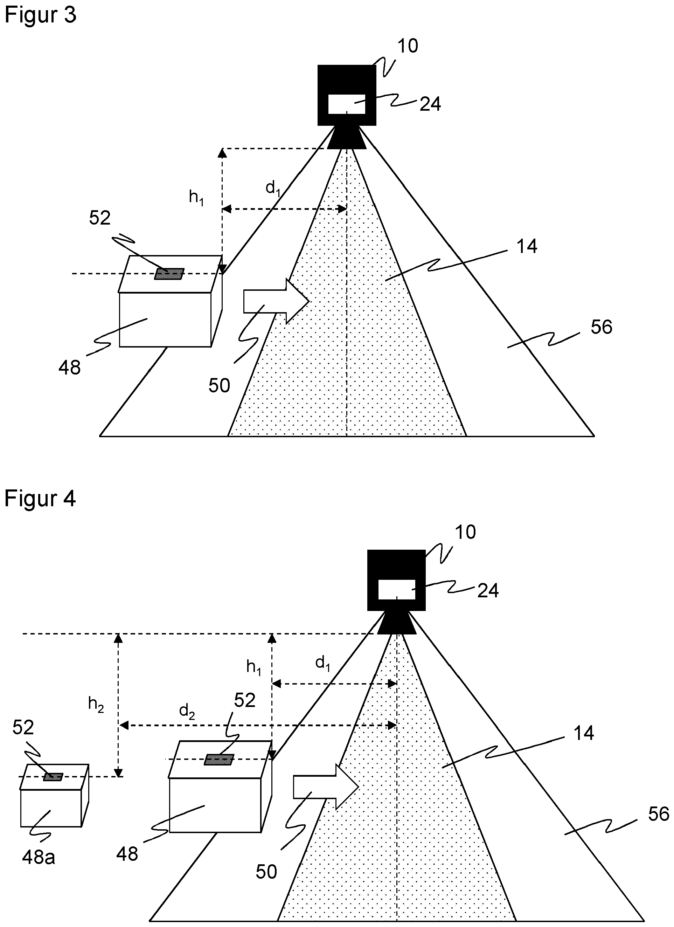

Figur 3 zeigt eine Kamera 10 mit nach unten gerichtetem Erfassungsbereich 14, wie in der Situation der Figur 2. Ein Abstandsmesssichtfeld 56 des Abstandssensors 24 ist in diesem Beispiel größer als der Erfassungsbereich 14 und schließt diesen ein. Es sind aber auch abweichende überlappende und nicht überlappende Konfigurationen von Erfassungsbereich 14 und Abstandsmesssichtfeld 56 vorstellbar. Ein zumindest teilweise vorgelagertes Abstandsmesssichtfeld 56 hat den Vorteil, dass frühzeitiger ein Abstandsmesswert zur Verfügung steht.

Ein aufzunehmendes Objekt 48 bewegt sich mit einer Geschwindigkeit v in den Erfassungsbereich 14. Die Geschwindigkeit v kann als Parameter einer Fördereinrichtung bekannt, durch einen externen Sensor wie einen Encoder gemessen, aus früheren Bildaufnahmen rekonstruiert oder durch den Abstandssensor 24 bestimmt sein. Im letzteren Fall weist der Abstandssensor 24 vorzugsweise mehrere Empfangszonen aus Lichtempfangselementen 30a auf, in die das Objekt 48 nacheinander eintritt, so dass aus der zeitlichen Abfolge und den gemessenen Abständen auf die Geschwindigkeit v geschlossen werden kann.

Das Objekt 48 wird bei Eintritt in das Abstandsmesssichtfeld 56 detektiert. Die Aufnahme soll ausgelöst werden, wenn es sich in der Mitte des Erfassungsbereichs 14 befindet. Dazu muss noch der Weg d₁ zurückgelegt werden, und die Zeit bis dahin ist durch t₁=d₁/v gegeben. Der Weg d₁ hängt noch von dem Abstand h₁ ab, da unterschiedlich hohe Objekte 48 in unterschiedlichen Positionen erstmals erfasst werden. Der Abstand h₁ wiederum wird von dem Abstandssensor 24 gemessen und muss selbst noch aus dem schräg statt senkrecht gemessenen Abstandswert hₘ₁ mittels h₁=hₘ₁ cos α umgerechnet werden. Dabei entspricht der Winkel α in der dargestellten Konfiguration unter der Annahme, dass hₘ₁ sofort bei Eintritt in das Abstandsmesssichtfeld 56 gemessen wird, dem halben Sichtwinkel des Abstandssensors 24 und ist jedenfalls aus der festen Konfiguration bekannt. Mit diesen Größen kann nun auch di=hi tan α berechnet werden.

Die in Figur 3 gezeigte Geometrie und das Zeitverhalten sind somit bekannt. Der Kamera 10 bleibt eine verfügbare Fokussierzeit dt=t₁, um die Fokuslage auf die Höhe h₁ einzustellen. In der verfügbaren Fokussierzeit dt kann noch eine Korrektur für Trägheiten und umgekehrt ein Aufschlag berücksichtigt werden, da nicht die Vorderkante des Objekts 48, sondern die Objektmitte aufgenommen werden soll.

Umgekehrt kann bestimmt werden, welche Umfokussierzeit DT benötigt wird, um von der derzeitigen Fokuslage auf eine ideale Fokuslage entsprechend dem gemessenen Abstand h₁ umzufokussieren. Das lässt sich beispielsweise durch eine Vorabkalibrierung der Fokusverstellung 17 erreichen. Es werden also verschiedenste Fokusverstellungen von einem Wert h₁ auf einen Wert h₂ durchgeführt, und dabei wird die Zeit bestimmt, bis die neue Fokuslage eingenommen ist. Stattdessen kann auch eine theoretische Systembetrachtung oder Simulation eingesetzt werden. Als Ergebnis gibt es jedenfalls eine Funktion oder Nachschlagtabelle, die einem Paar (h1, h2) eine benötigte Umfokussierzeit DT zuordnet. Ein beispielhafter Wert für eine Maximalverstellung von einer minimalen Fokuslage h₁ auf eine maximale Fokuslage h₂ oder umgekehrt ist 50 ms. Die benötigte Umfokussierzeit DT für die Situation der Figur 3 berechnet sich aus dem Paar (h₀, hi), wobei h0 die derzeit eingestellte Fokuslage ist. In einer Ruhestellung kann der Fokus auf eine mittlere Lage h₀ gefahren werden, um die benötigte Umfokussierzeit DT für das nächste Objekt 48 zu begrenzen

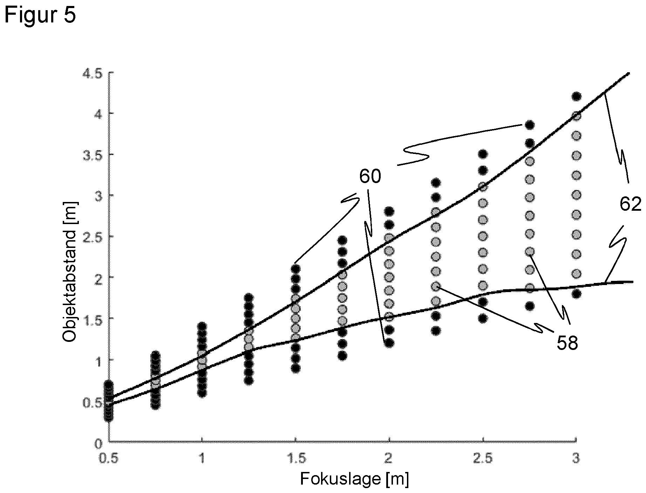

Wenn die verfügbare Fokussierzeit dt im Vergleich zu der benötigten Umfokussierzeit DT ausreicht, also dt ≥ DT, dann wird die ideale Fokuslage eingestellt und eine im Rahmen der Möglichkeiten der Kamera 10 optimal scharfe Aufnahme ausgelöst, sobald sich das Objekt 48 in der Aufnahmeposition befindet. Der problematische Fall ist, dass die verfügbare Fokussierzeit dt nicht ausreicht. Dann wird eine Kompensationsstrategie angewandt: Es wird kein Bild bei idealer Fokuslage aufgenommen, sondern bei einer Fokuslage, die schneller erreichbar ist. Dadurch wird eine gewisse Unschärfe in Kauf genommen, die jedoch wohldefiniert ist und weiterhin ermöglicht, den angestrebten Zweck mit der Bildaufnahme zu erreichen, beispielsweise einen Code 52 zu lesen. Später wird unter Bezugnahme auf die Figur 5 erläutert, wie sich eine noch zulässige Fokusabweichung insbesondere anhand eines dem jeweiligen Abstand zugeordneten Tiefenschärfenbereichs festlegen lässt.

Es gibt nun mehrere mögliche Kompensationsstrategien, die einzeln oder kombiniert angewandt werden können, wenn die verfügbare Fokussierzeit dt nicht ausreicht und bekannt ist, welche Fokusabweichung noch toleriert werden könnte. Kombinieren von Kompensationsstrategien kann auch bedeuten, mehrere Bildaufnahmen auszulösen, um beispielsweise sowohl ein etwas unscharfes Bild in idealer Objektlage als auch ein scharfes Bild in nicht mehr ganz idealer Objektlage aufzunehmen.

Mit der noch tolerierten Fokusabweichung kann eine Bildaufnahme bei einer Fokuslage h₁' erfolgen, die näher an der momentanen Fokuslage ist als h₁ und die demnach schneller erreicht wird. Eine Möglichkeit besteht darin, die Fokuslage doch in die ideale Fokuslage h₁ zu verstellen, obwohl klar ist, dass diese Fokusverstellung nicht rechtzeitig zu Ende vollzogen sein wird. Es wird dann verfrüht eine Bildaufnahme ausgelöst, sobald zumindest die Fokuslage h₁' erreicht ist. Die dafür benötigte Umfokussierzeit DT' < DT lässt sich vorab bestimmen, und nach DT' wird ausgelöst. Die Bildaufnahme kann direkt in der Fokuslage h₁' ausgelöst werden, oder es wird noch die verfügbare Fokussierzeit dt ausgeschöpft und dann eine Bildaufnahme in einer Fokuslage h₁" zwischen h₁ und h₁' ausgelöst.

Eine weitere Möglichkeit ist, statt der idealen Fokuslage die Fokuslage h₁' am näheren Rand des durch die noch zulässige Fokusabweichung gegebenen Toleranzrahmens oder Tiefenschärfenbereichs einzustellen, oder eine Fokuslage h₁' zwischen h₁ und h₁', die in der verfügbaren Fokussierzeit d1 gerade noch erreichbar ist. Das geht nur, wenn die verfügbare Fokussierzeit dt zumindest für diese Verstellung ausreicht, wofür eine neue benötigte Umfokussierzeit DT' bestimmt werden kann. Ansonsten wäre aber auch denkbar, trotzdem auf die genannte Fokuslage h₁' am Rand des Tiefenschärfenbereichs einzustellen und die Bildaufnahme erst dann auszulösen. Das Objekt 52 hat sich dann etwas zu weit bewegt, aber im Gegensatz zu einem Bild mit bekannt unzureichender Bildschärfe kann ein etwa zu spät aufgenommenes Bild durchaus noch brauchbar sein, beispielsweise den Code 52 noch enthalten. Der Objektversatz ist jedenfalls kleiner, als würde man darauf warten, bis die Fokuslage sogar der idealen Fokuslage h₁ entspricht, wobei eine Bildaufnahme zu jenem noch späteren Zeitpunkt auch vorstellbar ist, insbesondere für ein zusätzliches Bild.

Figur 4 zeigt nochmals eine Kamera 10 mit nach unten gerichtetem Erfassungsbereich 14 ähnlich Figur 3. Hier folgt jedoch ein weiteres Objekt 48a in kurzem Abstand, dessen Höhe h₂ sich deutlich von der Höhe h₁ des ersten Objekts 48 unterscheidet. Von dem weiteren Objekt 48a soll zu einem Zeitpunkt t₂ eine Aufnahme erzeugt werden, die sich aus dem zurückzulegenden Weg d₂ errechnet. Die Größen d₂, h₂ und t₂ berechnen sich analog zu den Größen d₁, h₁ und t₂, sind aber natürlich erst dann bestimmbar, wenn der Abstandssensor 24 da weitere Objekt 48a erstmals erfasst.

Die verfügbare Fokussierzeit ist nun dₜ=t₁-t₂, und nach der Aufnahme des Objekts 48 muss für die Aufnahme des weiteren Objekts 48a von h₁ auf h₂ umfokussiert werden, und daraus ergibt sich die benötigte Umfokussierzeit DT. Mit diesen Größen gelten die Erläuterungen zu Figur 3 analog, um bei zu kurzer verfügbarer Fokussierzeit dt eine Aufnahme bei einer Fokuslage h₂' zu erzeugen, die höchstens eine noch tolerierbare Fokusabweichung aufweist. Die Situation der Figur 4 ist je nach Objektabstand d₂-d₁ und Höhenunterschied h₂-h₁ womöglich noch kritischer als diejenige der Figur 3 und profitiert daher besonders von dem beschriebenen Umfokussieren, das erforderlichenfalls ganz die ideale Fokuslage h₂ erreicht und dafür schneller ist.

Bisher wurde die Frage nur angeschnitten, welche Fokusabweichungen noch toleriert werden können, und dies soll nun abschließend genauer betrachtet werden. Dabei kann zwischen rein optischen oder physikalischen Anforderungen und anwendungsspezifischen Anforderungen unterschieden werden. Eine Möglichkeit, eine Fokusabweichung als noch klein genug anzusehen ist, wenn der Unterschied zwischen eingestellter und idealer Fokuslage noch im Tiefenschärfenbereich bleibt, wobei die Ausdehnung des Tiefenschärfenbereichs wiederum eine Abhängigkeit von der jeweiligen Fokuslage beziehungsweise dem jeweiligen Objektabstand aufweist.

Ein physikalischer Tiefenschärfenbereich DOFₚ(h) lässt sich durch die Formel DOFₚ(h) ~ 2h²Nc/f² approximieren. Dabei ist h der Abstand zwischen Kamera 10 und Objekt 48, N die numerische Apertur f_{Num} des Objektivs der Empfangsoptik 16 und damit blendenabhängig, c der Zerstreukreis oder circle of confusion und entspricht dem Grad der erlaubten Unschärfe von beispielsweise einem Pixel auf dem Bildsensor 18, und f ist die Brennweite des Objektivs. Vieles davon sind demnach Kenngrößen des Objektivs, die bekannt und fix sind. Weitere Einflüsse auf den Tiefenschärfenbereich, wie die Blende oder die Belichtung, lassen sich durch Fixierung oder optimale Einstellung weitgehend ausschließen.

Nicht berücksichtigt sind jedoch in dem physikalischer Tiefenschärfenbereich DOFₚ(h) spezifische Anforderungen der Anwendung. Das wird an dem Beispiel des Codelesens deutlich: Es kommt letztlich nicht darauf an, ob Bilder physikalische Kontrastkriterien erfüllen, sondern ob der Code gelesen werden kann. In manchen Fällen lässt sich dieser anwendungsspezifische Tiefenschärfenbereich DOFₐₚₚ durch einen Faktor κ modellieren, der von applikationsspezifischen Parametern abhängt: DOFₐₚₚ(h) = κ DOFₚ(d). Typische applikationsspezifische Parameter sind hier die Modulgröße, beispielsweise gemessen in Pixel pro Modul, die Codeart und nicht zuletzt der angewandte Decoderalgorithmus. Wenn sich dies nicht durch einen einfachen Faktor κ abbilden lässt, so bleibt in jedem Fall die Möglichkeit, DOFapp durch Simulation oder Experiment zu bestimmen.

Figur 5 zeigt eine Darstellung von Leseversuchen eines Codes 52 auf einem Objekt 48 bei verschiedenen Fokuslagen und Objektabständen. Helle Punkte 58 bezeichnen erfolgreiche Leseversuche (GoodReads) und dunkle Punkte 60 nicht erfolgreiche Leseversuche (NoReads). Die beiden Linien 62 folgen der Grenze dazwischen, und das Abstandsintervall der beiden Linien bezeichnet je Fokuslage oder auch je Objektabstand den geforderten anwendungsspezifischen Tiefenschärfenbereich DOFapp(d).

Ein solches Diagramm kann für bestimmte Rahmenbedingungen hinsichtlich der genannten Parameter wie Codeart, Modulgröße, Decodierverfahren, Belichtung durch Messung oder Simulation erzeugt werden. Dadurch entsteht eine Zuordnungsvorschrift in Form einer Funktion oder Tabelle (LUT, Lookup Table), aus der die Steuer- und Auswertungseinheit 38 bei gegebenem vorläufigem Abstandswert einen Tiefenschärfenbereich und damit eine noch zulässige Fokusabweichung auslesen kann, mit der immer noch gewährleistet ist, dass ein Code lesbar sein wird. Es kann mehrere Zuordnungsvorschriften zu verschiedenen Rahmenbedingungen geben, so dass dann situations- und anwendungsbezogen beispielsweise je nach Codeart, Modulgröße, Belichtung und eingesetztem Decoder die passende noch zulässige Fokusabweichung bestimmt wird.

## Patentansprüche

1. Kamera (10) zur Erfassung eines durch einen Erfassungsbereich (14) bewegten Objekts (48), die einen Bildsensor (18) zur Aufnahme von Bilddaten, eine Empfangsoptik (16) mit einer Fokusverstelleinheit (17) zur Einstellung einer Fokuslage, einen Abstandssensor (24) zum Messen eines Abstandswerts zu dem Objekt (48) sowie eine mit dem Abstandssensor (24) und der Fokusverstelleinheit (17) verbundene Steuer- und Auswertungseinheit (38) aufweist, um in Abhängigkeit von dem Abstandswert eine Fokuslage einzustellen,
**dadurch gekennzeichnet,**
**dass** die Steuer- und Auswertungseinheit (38) dafür ausgebildet ist, als Kompensationsstrategie für den Fall, dass eine verfügbare Fokussierzeit nicht ausreicht, eine Aufnahme von Bilddaten in einer Fokuslage auszulösen, die unter Inkaufnehmen einer Unschärfe schneller erreichbar ist und in der absichtlich eine Fokusabweichung zu einer idealen Fokuslage besteht, die laut Abstandsmessung einzustellen wäre, wobei die Fokusabweichung klein genug für eine geforderte Bildschärfe der Bilddaten bleibt.

2. Kamera (10) nach Anspruch 1,
wobei die Steuer- und Auswertungseinheit (38) dafür ausgebildet ist, eine verfügbare Fokussierzeit aus dem Zeitpunkt zu bestimmen, zu dem das Objekt (48) die Aufnahmeposition erreichen wird, wobei insbesondere der Abstandssensor (24) dafür ausgebildet ist, die Geschwindigkeit der Bewegung des Objekts (48) zu messen.

3. Kamera (10) nach Anspruch 1 oder 2,
wobei die Steuer- und Auswertungseinheit (38) dafür ausgebildet ist, eine benötigte Umfokussierzeit aus der momentanen Fokuslage und der gemäß dem gemessenen Abstandswert idealen Fokuslage zu bestimmen, wobei insbesondere in der Steuer- und Auswertungseinheit (38) eine Zuordnungsvorschrift zwischen Verstellungen aus einer ersten Fokuslage in eine zweite Fokuslage und einer dafür benötigten Umfokussierzeit abgelegt ist.

4. Kamera (10) nach Anspruch 2 und 3,
wobei die Steuer- und Auswertungseinheit (38) dafür ausgebildet ist, die verfügbare Fokussierzeit mit der benötigten Umfokussierzeit zu vergleichen und Bilddaten nur dann mit einer Fokusabweichung aufzunehmen, wenn die benötigte Umfokussierzeit nicht ausreicht.

5. Kamera (10) nach einem der vorhergehenden Ansprüche,
wobei die Steuer- und Auswertungseinheit (38) dafür ausgebildet ist, eine Fokusverstellung auf die ideale Fokuslage vorzunehmen, jedoch schon Bilddaten aufzunehmen, sobald die Fokusabweichung klein genug für eine geforderte Bildschärfe geworden ist.

6. Kamera (10) nach Ansprüche 1 bis 4,
wobei die Steuer- und Auswertungseinheit (38) dafür ausgebildet ist, eine Fokusverstellung nicht bis zu der idealen Fokuslage, sondern nur bis auf die Fokusabweichung vorzunehmen.

7. Kamera (10) nach einem der vorhergehenden Ansprüche,
wobei die Steuer- und Auswertungseinheit (38) dafür ausgebildet ist, die Aufnahme von Bilddaten über eine verfügbare Fokussierzeit hinaus zu verzögern, wenn erst dann eine Fokuslage mit einer Fokusabweichung erreichbar ist, die klein genug für eine geforderte Bildschärfe der Bilddaten bleibt.

8. Kamera nach (10) einem der vorhergehenden Ansprüche,
wobei ein Abstandsmesssichtfeld (56) des Abstandssensors (24) mit dem Erfassungsbereich (14) zumindest teilweise überlappt und/oder der Abstandssensor (24) in die Kamera (10) integriert ist.

9. Kamera (10) nach Anspruch 8,
wobei das Abstandsmesssichtfeld (56) so ausgerichtet ist, dass darin ein Objekt (48) erfasst wird, ehe es in den Erfassungsbereich (14) eintritt.

10. Kamera (10) nach einem der vorhergehenden Ansprüche,
wobei der Abstandssensor (24) als optoelektronischer Abstandssensor insbesondere nach dem Prinzip des Lichtlaufzeitverfahrens ausgebildet ist.

11. Kamera (10) nach einem der vorhergehenden Ansprüche,
wobei die Steuer- und Auswertungseinheit (38) dafür ausgebildet ist, die Fokusabweichung als klein genug für eine geforderte Bildschärfe der Bilddaten zu bewerten, wenn sich das Objekt (48) laut Abstandsmesswert bei Auslösen der Aufnahme der Bilddaten in der eingestellten Fokuslage noch in einem Tiefenschärfenbereich befindet, insbesondere einem aus optischen Eigenschaften und/oder aus anwendungsspezifischen Anforderungen bestimmten Tiefenschärfenbereich.

12. Kamera (10) nach einem der vorhergehenden Ansprüche,
wobei die Steuer- und Auswertungseinheit (38) dafür ausgebildet ist, mit Hilfe der Bilddaten einen Codeinhalt eines Codes (52) auf dem Objekt (48) zu lesen.

13. Kamera (10) nach Anspruch 12,
wobei die Steuer- und Auswertungseinheit (38) dafür ausgebildet ist, die Fokusabweichung als klein genug für eine geforderte Bildschärfe der Bilddaten zu bewerten, wenn die Bildschärfe ausreicht, einen aufgenommenen Code (52) zu lesen, wobei dies insbesondere abhängig von einer Codeart, einer Modulgröße und/oder einem Decodierverfahren ist.

14. Kamera (10) nach einem der vorhergehenden Ansprüche,
die stationär an einer Fördereinrichtung (46) montiert ist, die zu erfassende Objekte (48) in einer Förderrichtung (50) durch den Erfassungsbereich (14) führt.

15. Verfahren zur Erfassung von Bilddaten eines durch einen Erfassungsbereich (14) bewegten Objekts (48), bei dem mit einem Abstandssensor (24) ein Abstandswert zu dem Objekt (48) gemessen und in Abhängigkeit von dem Abstandswert eine Fokuslage einer Empfangsoptik (16) eingestellt wird, **dadurch gekennzeichnet,**
**dass** als Kompensationsstrategie für den Fall, dass eine verfügbare Fokussierzeit nicht ausreicht, von einer Steuer- und Auswertungseinheit (38) eine Aufnahme von Bilddaten in einer Fokuslage ausgelöst wird, die unter Inkaufnehmen einer Unschärfe schneller erreichbar ist und in der absichtlich eine Fokusabweichung zu einer idealen Fokuslage besteht, die laut Abstandsmessung einzustellen wäre, wobei die Fokusabweichung klein genug für eine geforderte Bildschärfe der Bilddaten bleibt.

## Claims

1. A camera (10) for detecting an object (48) moving through a detection area (14), the camera (10) comprising an image sensor (18) for recording image data, receiving optics (16) having a focus adjustment unit (17) for adjusting a focus position, a distance sensor (24) for measuring a distance value to the object (48), and a control and evaluation unit (38) connected to the distance sensor (24) and the focus adjustment unit (17) in order to adjust a focus position in dependence on the distance value,
**characterized in that** the control and evaluation unit (38) is configured to trigger, as a compensation strategy in the event that an available focusing time is not sufficient, a recording of image data in a focus position which can be reached more quickly while accepting a blurring and in which there is intentionally a focus deviation from an ideal focus position which would have to be set according to the distance measurement, the focus deviation remaining small enough for a required image sharpness of the image data.

2. The camera (10) according to claim 1,
wherein the control and evaluation unit (38) is configured to determine an available focusing time from the time at which the object (48) will reach the recording position, wherein in particular the distance sensor (24) is adapted to measure the speed of movement of the object (48).

3. The camera (10) according to claim 1 or 2,
wherein the control and evaluation unit (38) is configured to determine a required refocusing time from the current focus position and the ideal focus position according to the measured distance value, wherein in particular in the control and evaluation unit (38) an allocation rule is stored between adjustments from a first focus position into a second focus position and a refocusing time required therefor.

4. The camera (10) according to claim 2 and 3,
wherein the control and evaluation unit (38) is configured to compare the available focusing time with the required refocusing time and to record image data with a focus deviation only if the required refocusing time is not sufficient.

5. The camera (10) according to any of the preceding claims,
wherein the control and evaluation unit (38) is configured to perform a focus adjustment to the ideal focus position, but to already record image data as soon as the focus deviation has become small enough for a required image sharpness.

6. The camera (10) according to any of claims 1 to 4,
wherein the control and evaluation unit (38) is configured to carry out a focus adjustment not up to the ideal focus position, but only up to the focus deviation.

7. The camera (10) according to any of the preceding claims,
wherein the control and evaluation unit (38) is configured to delay the acquisition of image data beyond an available focusing time, when only then a focus position with a focus deviation that remains small enough for a required image sharpness of the image data can be achieved.

8. The camera according to (10) any of the preceding claims,
wherein a distance measuring field of view (56) of the distance sensor (24) at least partially overlaps with the detection area (14) and/or the distance sensor (24) is integrated into the camera (10).

9. The camera (10) according to claim 8,
wherein the distance measurement field of view (56) is oriented to detect an object (48) therein before it enters the detection area (14).

10. The camera (10) according to any of the preceding claims,
wherein the distance sensor (24) is configured as an optoelectronic distance sensor, in particular according to the principle of the time-of-flight method.

11. The camera (10) according to any of the preceding claims,
wherein the control and evaluation unit (38) is configured to evaluate the focus deviation as small enough for a required image sharpness of the image data if, according to the distance measurement value, the object (48) is still located in a depth of field range when the recording of the image data is triggered in the set focus position, in particular a depth of field range determined from optical properties and/or from application-specific requirements.

12. The camera (10) according to any of the preceding claims,
wherein the control and evaluation unit (38) is configured to read a code content of a code (52) on the object (48) based on the image data.

13. The camera (10) according to claim 12,
wherein the control and evaluation unit (38) is configured to evaluate the focus deviation as small enough for a required image sharpness of the image data if the image sharpness is sufficient to read a recorded code (52), this being in particular dependent on a code type, a module size and/or a decoding method.

14. The camera (10) according to any of the preceding claims,
that is stationarily mounted on a conveyor device (46) that guides objects (48) to be detected in a conveying direction (50) through the detection area (14).

15. A method for recording image data of an object (48) moving through a detection area (14), wherein a distance value to the object (48) is measured with a distance sensor (24) and a focus position of receiving optics (16) is set as a function of the distance value,
**characterized in that**, as a compensation strategy in the event that an available focusing time is insufficient, a control and evaluation unit (38) triggers a recording of image data in a focus position which can be reached more quickly while accepting a blurring and in which there is intentionally a focus deviation from an ideal focus position which would have to be set according to the distance measurement, the focus deviation remaining small enough for a required image sharpness of the image data.

## Revendications

1. Caméra (10) pour détecter un objet (48) déplacé à travers une zone de détection (14), comprenant un capteur d'images (18) pour enregistrer des données d'image, une optique de réception (16) ayant une unité de réglage de focalisation (17) pour régler une position focale, un capteur de distance (24) pour mesurer une valeur de distance par rapport à l'objet (48), ainsi qu'une unité de commande et d'évaluation (38) reliée au capteur de distance (24) et à l'unité de réglage de focalisation (17), pour régler une position focale en fonction de la valeur de distance,
**caractérisée en ce que**
l'unité de commande et d'évaluation (38) est réalisée pour déclencher, en tant que stratégie de compensation pour le cas où un temps de focalisation disponible ne suffit pas, un enregistrement de données d'image dans une position focale qui peut être atteinte plus rapidement en acceptant un flou et dans laquelle il existe intentionnellement un écart de focalisation par rapport à une position focale idéale qui devrait être réglée selon la mesure de distance, l'écart de focalisation restant suffisamment petit pour une netteté d'image requise des données d'image.

2. Caméra (10) selon la revendication 1,
dans laquelle l'unité de commande et d'évaluation (38) est réalisée pour déterminer un temps de focalisation disponible à partir de l'instant où l'objet (48) atteindra la position d'enregistrement, le capteur de distance (24) étant en particulier réalisé pour mesurer la vitesse du mouvement de l'objet (48).

3. Caméra (10) selon la revendication 1 ou 2,
dans laquelle l'unité de commande et d'évaluation (38) est réalisée pour déterminer un temps de refocalisation nécessaire à partir de la position focale momentanée et de la position focale idéale selon la valeur de distance mesurée, en particulier, une prescription d'association entre des réglages depuis une première position focale jusque dans une deuxième position focale et un temps de refocalisation nécessaire à cet effet étant stockée dans l'unité de commande et d'évaluation (38).

4. Caméra (10) selon les revendications 2 et 3,
dans laquelle l'unité de commande et d'évaluation (38) est réalisée pour comparer le temps de focalisation disponible avec le temps de refocalisation nécessaire et pour n'enregistrer des données d'image avec un écart de focalisation que si le temps de refocalisation nécessaire n'est pas suffisant.

5. Caméra (10) selon l'une des revendications précédentes,
dans laquelle l'unité de commande et d'évaluation (38) est réalisée pour effectuer un réglage de focalisation sur la position focale idéale, mais pour enregistrer déjà des données d'image dès que l'écart de focalisation est devenu suffisamment petit pour une netteté d'image requise.

6. Caméra (10) selon les revendications 1 à 4,
dans laquelle l'unité de commande et d'évaluation (38) est réalisée pour effectuer un réglage de focalisation non pas jusqu'à la position focale idéale, mais seulement jusqu'à l'écart de focalisation.

7. Caméra (10) selon l'une des revendications précédentes,
dans laquelle l'unité de commande et d'évaluation (38) est réalisée pour retarder l'enregistrement de données d'image au-delà d'un temps de focalisation disponible, si une position focale avec un écart de focalisation qui reste suffisamment petit pour une netteté d'image requise des données d'image ne peut être atteinte qu'alors.

8. Caméra (10) selon l'une des revendications précédentes,
dans laquelle un champ de vision de mesure de distance (56) du capteur de distance (24) se chevauche au moins partiellement avec la zone de détection (14) et/ou le capteur de distance (24) est intégré dans la caméra (10).

9. Caméra (10) selon la revendication 8,
dans laquelle le champ de vision de mesure de distance (56) est orienté de telle sorte qu'un objet (48) y est détecté avant qu'il n'entre dans la zone de détection (14).

10. Caméra (10) selon l'une des revendications précédentes,
dans laquelle le capteur de distance (24) est réalisé sous forme de capteur de distance optoélectronique, en particulier selon le principe du temps de vol de la lumière.

11. Caméra (10) selon l'une des revendications précédentes,
dans laquelle l'unité de commande et d'évaluation (38) est réalisée pour évaluer l'écart de focalisation comme étant suffisamment petit pour une netteté d'image requise des données d'image lorsque, selon la valeur de mesure de distance, l'objet (48) se trouve encore dans une plage de profondeur de champ lors du déclenchement de l'enregistrement des données d'image dans la position focale réglée, en particulier dans une plage de profondeur de champ déterminée à partir des propriétés optiques et/ou des exigences spécifiques à l'application.

12. Caméra (10) selon l'une des revendications précédentes,
dans laquelle l'unité de commande et d'évaluation (38) est réalisée pour lire, à l'aide des données d'image, un contenu de code d'un code (52) sur l'objet (48).

13. Caméra (10) selon la revendication 12,
dans laquelle l'unité de commande et d'évaluation (38) est réalisée pour évaluer l'écart de focalisation comme étant suffisamment petit pour une netteté d'image requise des données d'image, lorsque la netteté d'image est suffisante pour lire un code (52) enregistré, ceci dépendant en particulier d'un type de code, d'une taille de module et/ou d'un procédé de décodage.

14. Caméra (10) selon l'une des revendications précédentes,
qui est montée de manière stationnaire sur un dispositif de transport (46) qui guide les objets (48) à détecter dans une direction de transport (50) à travers la zone de détection (14).

15. Procédé d'acquisition de données d'image d'un objet (48) déplacé à travers une zone de détection (14), dans lequel une valeur de distance par rapport à l'objet (48) est mesurée avec un capteur de distance (24) et une position focale d'une optique de réception (16) est réglée en fonction de la valeur de distance,
**caractérisé en ce que**
en tant que stratégie de compensation pour le cas où un temps de focalisation disponible ne suffit pas, un enregistrement de données d'image est déclenché par une unité de commande et d'évaluation (38) dans une position focale qui peut être atteinte plus rapidement en acceptant un flou et dans laquelle il existe intentionnellement un écart de focalisation par rapport à une position focale idéale qui devrait être réglée selon la mesure de distance, l'écart de focalisation restant suffisamment petit pour une netteté d'image requise des données d'image.
